# EUROPEAN PATENT APPLICATION

(11) **EP 3 434 806 A1**
(43) Date of publication of application: **30.01.2019**
(21) Application number: 18184972.0
(22) Date of filing: 23.07.2018
(51) Int. Cl.: C23C 18/22, C08J 7/12

(54) **CHROME-FREE ETCH SOLUTIONS FOR CHEMICALLY RESISTANT POLYMER MATERIALS**

(30) Priority: 25.07.2017 US 201762536490 P
(71) Applicant: Rohm and Haas Electronic Materials LLC, Marlborough, MA 01752 (US)
(72) Inventor: MULZER, Catherine, Marlborough, MA 01752 (US)
(74) Representative: Houghton, Mark Phillip

(57) **Abstract**

Chemically resistant polymers are etched using a chrome-free etch solution which is aqueous and alkaline. The chrome-free etch aqueous alkaline solution is environmentally friendly and can be used in the preparation of chemically resistant polymers for electroless metal plating including the plating of through-hole walls in the manufacture of printed circuit boards.

## Description

### Field of the Invention

The present invention is directed to chrome-free etch solutions and methods for etching chemically resistant polymer materials. More specifically, the present invention is directed to chrome-free etch solutions and methods for etching chemically resistant polymer materials, wherein the chrome-free etch solutions are aqueous alkaline solutions and are environmentally friendly and the chemically resistant polymer materials include acrylonitrile butadiene styrene, acrylonitrile butadiene styrene-polycarbonate or combinations thereof.

### Background of the Invention

Prior to electroless metallization a substrate surface containing organic polymers is typically etched with an etch solution to achieve good adhesion between the substrate surface and electroless plated metals. Chemically resistant polymers such as, for example, acrylonitrile butadiene styrene and acrylonitrile butadiene styrene-polycarbonate are highly desirable for articles and products which are electroless metal plated; however, such polymers are resistant to many chemicals used in etch solutions. Although they are "attacked" by concentrated sulfuric acid and nitric acid, acrylonitrile butadiene styrene and acrylonitrile butadiene styrene-polycarbonate tend to be resistant to aqueous acids, alkalis, concentrated hydrochloric and phosphoric acids and alcohols. Acrylonitrile butadiene styrene and acrylonitrile butadiene styrene-polycarbonate have been successfully etched with etching solutions of hexavalent chromium or Cr(VI). However, such etching solutions are toxic and environmentally unfriendly. Etch solutions of Cr(VI) present undue hazards to workers in the plating arts as well as the environment. Although great efforts have been made over the years by many chemical suppliers and the plating industry to replace currently used toxic etching solutions, no satisfactory commercial product which is free of Cr(VI) is currently available on the market.

Cr(VI) containing compounds are suspected of being cancer-causing. Accordingly, dealing with these compounds is subject to strict environmental regulations. For example, in the European Union the regulation Registration, Evaluation, Authorization and Restriction of Chemicals, known as REACh, has banned numerous chemicals. In the face of the potential dangers caused by Cr(VI) releasing compounds, a prohibition of the industrial use of Cr(VI) containing compounds cannot be excluded. In addition, Cr(VI) containing etches often include concentrated sulfuric acid and must be used very carefully. The acid is highly corrosive and disposal is expensive.

Concentrated sulfuric acid without Cr(VI) has also been used as an etchant such as in a solution conventionally known as "Piranha" solution. This solution is a 3:1 mixture of concentrated sulfuric acid with hydrogen peroxide. This is an extremely exothermic mixture and becomes hot when the hydrogen peroxide is added to the sulfuric acid. In general, working with sulfuric acid is hazardous. Sulfuric acid fumes are toxic and have target organ effects on skin, respiratory, reproductive systems and fetal tissue.

Over the years a variety of chemical species have been suggested in the industry for use as chrome-free oxidizing agents in wet etching processes to modify organic polymer surfaces. Such oxidants include Mn(VII), Mn(VI), Mn(IV), Ce(IV), persulfate, organic solvents such as dioxane, metal halogenides and nitrates of Fe, Cu, Ti, Zn, and Mg. Oxidizing agents are consumed either by the etching process or due to the instability of the oxidants. Therefore, frequent replenishing or a re-generation method is needed. Regeneration methods are especially preferred for industrial settings. Mn(VII) is one of the most commonly used oxidizing agents. In solution it is typically in the form of ionic species MnO₄⁻. Electrochemical regeneration of Mn(VII) in alkaline solutions has been used in different industries, such as in the manufacture of circuit boards. In acidic media regeneration of Mn(VII) appears more difficult than in an alkaline medium.

However, either in an acidic or alkaline medium, Mn(VII) is unstable and tends to reduce to its lower oxidation states, especially to Mn(IV), consequently forming a large quantity of the insoluble MnO₂ and causing quality issues on the treated polymer surfaces. Frequent removal of MnO₂ precipitation from the permanganate etching solution is therefore required in the industrial scale operation. Therefore, such etch solutions are inadequate to meet the demands of the metal plating industry for polymer preparation for electroless metallization, including electroless metallization of chemically resistant polymers, such as acrylonitrile butadiene styrene and acrylonitrile butadiene styrene-polycarbonate.

Accordingly, there is still a need for a method of etching chemically resistant polymer materials such as acrylonitrile butadiene styrene and acrylonitrile butadiene styrene polycarbonate which is efficient, provides good surface roughening in preparation for electroless metallization, and is both worker and environmentally friendly.

### Summary of the Invention

The present invention is directed to a method including: providing a substrate including one or more organic polymers chosen from acrylonitrile butadiene styrene and acrylonitrile butadiene styrene-polycarbonate; providing an aqueous alkaline etch solution composed of hydrogen peroxide and one or more sources of hydroxide ions; and applying the aqueous alkaline etch solution to the substrate to etch at least the one or more organic polymers chosen from acrylonitrile butadiene styrene and acrylonitrile butadiene styrene-polycarbonate.

The methods of the present invention enable efficient etching of chemically resistant polymer materials such as acrylonitrile butadiene styrene and acrylonitrile butadiene styrene-polycarbonate to provide a rough surface for the chemically resistant polymer materials in preparation for electroless metallization. The surface of the chemically resistant polymer materials as etched by the methods of the present invention enables good metal adhesion to the chemically resistant polymer material. Accordingly, metals electrolessly plated on the etched chemically resistant polymer materials have good peel strength. The probability of adhesion failure and blistering between the surface of the etched polymer material and the electrolessly plated metal layers is substantially reduced. Since blistering can propagate even during electrolytic metal plating stages subsequent to electroelss metal plating, the methods of the present invention also improve adhesion of electrolytic deposits. Further, the aqueous alkaline etch solution of the present invention is a chrome-free etch solution, free of hazardous acids, such as sulfuric acid and nitric acid, and is also a permanganate-free etch. The aqueous alkaline etch solution of the present invention is both worker and environmentally friendly.

### Brief Description of the Drawings

Figure 1 is a photograph of a metallized ABS-PC coupon that has been pre-treated only with an aqueous alkaline composition of the present invention and not treated with a solvent swell.
Figure 2 is a photograph of a metalized ABS-PC coupon that has not been pre-treated with an aqueous alkaline composition of the present invention and also has not been treated with a solvent swell.
Figure 3 is a SEM at 25,000 X of a cleaned and solvent swelled acrylonitirile butadiene styrene polymer surface.
Figure 4 is a SEM at 23,800 X of an acrylonitrile butadiene styrene polymer surface cleaned, treated with a solvent swell and an aqueous alkaline etch solution of the present invention.
Figure 5 is a SEM at 12,300 X of an acrylonitrile butadiene styrene polymer surface cleaned, treated with a solvent swell and a chrome (VI) acid etch.

### Detailed Description of the Invention

As used throughout this specification, the abbreviations given below have the following meanings, unless the context clearly indicates otherwise: ° C = degrees Centigrade; g = gram; L = liter; M = molar or moles/liter; mL = milliliters; g/L = grams per liter; m = meters; cm = centimeter; mm = millimeters; µm = microns; N/cm = Newtons per centimeter; Newtons = 1 kilogram meter per second squared; kN = kilo-Newton; wt% = percent by weight; DI = deionized water; ABS = acrylonitrile butadiene styrene; ABS-PC = acrylonitrile butadiene styrene polycarbonate; Cr(VI) = chromium six oxidation state; sulfuric acid = H₂SO₄; hydrogen peroxide = H₂O₂; EO/PO = ethylene oxide/propylene oxide; potassium dichromate = K₂Cr₂O₇; EDTA = ethylenediaminetetraacetic acid; ammonium hydroxide = NH₄OH; and SEM = scanning electron microscope.

All amounts are percent by weight and all ratios are by weight, unless otherwise noted. The terms "a" and "an" are understood to include both the singular and the plural. The term "solvent swell" or "solvent swelling" means contacting an organic polymer with a solvent such that the polymer does not completely dissolve in the solvent but rather absorbs a portion of the solvent such that it subsequently swells or increases in volume. The term "chemically resistant polymer" means an organic polymer or organic copolymer where surface morphology is not readily modified, such as roughened or textured, upon exposure to chemicals such as aqueous acids, alkalis, concentrated hydrochloric acid, phosphoric acid and alcohols. The term "modified" means altering the physical, chemical or both physical and chemical characteristics of the surface from its initial physical or chemical or both physical and chemical characteristics. The term "surface morphology" means shape, texture and distribution of materials at the surface. The term "matte" means dull or lack of luster. The term "polymer" as used in the present application includes copolymer. The terms "roughen" and "texturize" are used interchangeably throughout the present specification. The term "gemini surfactants (dimeric surfactants)" means surfactants which have two hydrophilic head groups and two hydrophobic groups in the molecule. The term "aqueous based" or "aqueous" means that the composition's solvent is water. The term "miscible" means capable of being mixed to provide a substantially stable composition such that the mixed components do not readily separate into their original components within a desired time period for their desired function. Acrylonitrile butadiene styrene and acrylonitrile butadiene styrene polycarbonate are thermoplastic polymers. All numerical ranges are inclusive and combinable in any order, except where it is logical that such numerical ranges are constrained to add up to 100%.

Substrates of the present invention include one or more chemically resistant polymers. Preferably, such chemically resistant polymers are chosen from one or more of ABS and ABS-PC. More preferably, the substrates of the present invention include ABS, even more preferably, the substrates of the present invention are composed of one or more of ABS and ABS-PC, still more preferably the substrates of the present invention are composed of ABS. The substrates of the present invention can be incorporated in various types of articles where electroless metal plated substrates which include one or more of electroless metal plated ABS and ABS-PC are desired.

Prior to metallization, at least one of ABS and ABS-PC are treated with an aqueous alkaline etch composition composed of hydrogen peroxide, one or more sources of hydroxide ions and water to roughen or texturize surfaces of the ABS and ABS-PC of the substrate.

Prior to electroless metallization and etching of the substrates of the present invention, optionally, but preferably, the substrates can be cleaned using conventional cleaning compositions known in the art and literature to clean polymer materials prior to metallization. Preferably, such cleaning compositions are alkaline. More preferably such cleaning compositions have a pH equal to or greater than 9, even more preferably, such cleaning compositions have a pH of 9-12. Preferably, such alkaline compositions are aqueous based, or they are mixtures of water and one or more aqueous soluble or aqueous miscible organic solvents. Such alkaline cleaning compositions can include one or more amines, one or more surfactants and one or more of aqueous or organic solvents.

Amines include, but are not limited to, alkanolamines which include, but are not limited to, monoethanolamine, diethanolamine and triethanolamine; hydroxylamines; tertiary amines such as, but not limited to, trimethylamine and EDTA. Such amines can be included in the cleaning compositions in conventional amounts as are well known to those of skill in the art. Many of the amines are commercially available and can be obtained commercially from Sigma Aldrich-Aldrich Fine Chemicals (Milwaukee, WI) or they can be prepared from processes known in the art or in the chemical literature. Preferably, such amines are included in amounts of at least 0.1 g/L and greater, more preferably, from 0.5 g/L to 10 g/L.

Various conventional surfactants well known in the art can be included in the cleaning compositions, such as anionic, cationic, amphoteric, nonionic, gemini surfactants, or combinations thereof. Many of the conventional surfactants are commercially available from Sigma Aldrich or can be prepared from processes known in the art or in the chemical literature. There is no preferred surfactant or combination of surfactants. An example of typical nonionic surfactants include, but are not limited to, alkoxy polyoxyethylene ethanol surfactants wherein the alkoxy is preferably of 10-20 carbon atoms and the ethylene oxide content is preferably 6-20 moles per mole of surfactant molecule. Such nonionic surfactants are commercially available under the Tradename SURFONIC™ J-40 surfactant formulation (available from Alchem Chemical Company). Examples of other nonionic surfactants are the polyoxyethylene aryl ethers. An example of a commercially available surfactant formulation which includes polyoxyethylene aryl ethers is SURFONYL™ 104E gemini surfactant formulation (available from Air Products). EO/PO nonionic surfactants can also be included. Such EO/PO nonionic surfactants are described in more detail below. The various surfactants can be included in conventional amounts used to clean polymer materials prior to electroless metallization. Preferably, surfactants can be included in amounts of 0.5 g/L or greater, more preferably, in amounts of 1 g/l to 15 g/L.

Cleaning is done, for example, by spraying or immersing the substrate in the cleaning composition for a sufficient amount of time to adequately clean the polymer material. Preferably, the substrate is cleaned for 2-10 minutes at temperatures from 30-70 °C. After cleaning, the substrate is optionally rinsed with DI water.

Prior to metallization and etching, and after cleaning the substrates, optionally, but preferably, the substrates are then swelled with a solvent swell to increase the volume of the polymer material in further preparation for etching with an aqueous alkaline etch composition of the present invention. Solvent swells used to treat the chemically resistant polymers of the present invention include one or more organic solvents, optionally water, and one or more surfactants and, optionally, one or more additives to assist in swelling the chemically resistant polymers.

Organic solvents include, but are not limited to, glycols, glycol ethers, glycol ether acetates, alkylene carbonates and ketones. Examples of glycols which can be used to swell the chemically resistant polymers of the present invention are ethylene glycol, diethylene glycol, triethylene glycol, polyethylene glycol, propylene glycol, dipropylene glycol, tripropylene glycol and polyprolylene glycol. Examples of glycol ethers which can be used to swell the chemically resistant polymers of the present invention are diethylene glycol monomethyl ether, diethylene glycol monopropyl ether, diethylene glycol monobutyl ether, ethylene glycol monomethyl ether, ethylene glycol phenyl ether, dipropylene glycol monomethyl ether, dipropylene glycol monopropyl ether and dipropylene glycol monobutyl ether. Examples of glycol ether acetates are dipropylene glycol monomethyl ether acetate, propylene glycol monomethyl ether acetate and propylene glycol phenyl ether acetate. Examples of alkylene carbonates are ethylene carbonate and propylene carbonate. Examples of ketones are acetone, hexanone and pentanone. Preferably, the solvent is chosen from glycols ethers, alkylene carbonates and ketones. More preferably, the solvent is chosen from alkylene carbonates and ketones. Even more preferably, the solvent is chosen from alkylene carbonates and acetone. Most preferably, the solvent is chosen from alkylene carbonates of which the preferred alkylene carbonate is propylene carbonate. Such solvents are included in the solvent swell in amounts of at least 50 g/L, preferably, from 50 g/L to 150 g/L.

Surfactants included in the solvent swell can be one or more of anionic, cationic, amphoteric, nonionic and gemini surfactants. Surfactants can be included in conventional amounts. Preferably, surfactants can be included in the solvent swells in amounts of at least 0.1 g/L, more preferably, from 0.5 g/L to 10 g/L. Even more preferably, the solvent swell includes one or more EO/PO nonionic polymer surfactants. The EO/PO polymers can be block or random. Examples of commercially available EO/PO polymer surfactants are the PLURONIC™ polymers available from BASF. The PLURONIC™ polymer tradename refers to poloxamers which are nonionic tailback copolymers composed of a central hydrophobic chain of polyoxypropylene flanked by two hydrophilic chains of polyoxyethylene. A general chemical name for such copolymers is α-hydroxy-ω-hydroxypoly(oxyethylene)*ₓ*poly(oxypropylene)*_{y}*poly(oxyethylene)*_{z}*, wherein *x* is from 5-*200, y* is from 5-100 and *z* is from 5-200. Poloxamers can have molecular weights from about 2000 to about 20000 daltons. Examples of commercially available poloxamers are PLURONIC™ L-10, L-84, L-101, L-121, L-31, L-35, L-43, L-44 and L-64 surfactants.

Additional additives which optionally can be included in the solvent swells include, but are not limited to, lactones. Lactones include, but are not limited to, γ-butyrolactone, ε-caprolactone, γ-caprolactone and γ-valerolactone. Such lactones can be included in the solvent swells in amounts of preferably from 0.5 g/L to 10 g/L, more preferably, from 1 g/L to 5 g/L.

The solvent swell is applied to the substrate, for example, by spraying or immersing the substrate in the solvent swell for a sufficient time to swell or increase the volume of the polymer material to be etched. Preferably, the substrate is treated with the solvent swell for 1-5 minutes at temperatures from 30-70 °C. The solvent swell treated substrate is then optionally rinsed with DI water and then etched with the aqueous based alkaline etch composition of the present invention.

The aqueous alkaline etch composition of the present invention is composed of sufficient amounts of hydrogen peroxide, one or more sources of hydroxide ions and water to etch at least one of ABS and ABS-PC. Preferably, the aqueous alkaline etch composition includes 5 g/L to 20 g/L hydrogen peroxide. More preferably, hydrogen peroxide is included in the etch composition in amounts of 10 g/L to 15 g/L, even more preferably, from 12 g/L to 15 g/L. One or more sources of hydroxide ions include, but are not limited to, alkali metal hydroxides, alkaline earth metal hydroxides, ammonium hydroxide and quaternary ammonium hydroxides. One or more sources of hydroxide ions are preferably included in the aqueous alkaline composition of the present invention in amounts of 5 g/L to 30 g/L, more preferably, from 10 g/L to 20 g/L, even more preferably, from 15 g/L to 20 g/L. A pH of the aqueous alkaline composition of the present invention ranges from 10 or greater, preferably from 11 to 14, more preferably, from 12 to 14, still more preferably, from 12.5 to 14, most preferably, from 12.5 to 13.5.

Alkali metal hydroxides include sodium hydroxide, potassium hydroxide, lithium hydroxide and cesium hydroxide. Preferably, the alkali metal hydroxide is sodium or potassium hydroxide. More preferably, the alkali metal hydroxide is sodium hydroxide. Preferably, the alkaline earth metal hydroxide is calcium hydroxide. Preferably, quaternary ammonium hydroxides are chosen from (C₁-C₈)alkyl quaternary ammonium hydroxide, more preferably, the quaternary ammonium hydroxides are chosen from (C₁-C₄)alky quaternary ammonium hydroxides, even more preferably, the quaternary ammonium hydroxides are chosen from (C₁-C₂)alky quaternary ammonium hydroxides. Most preferably, the quaternary ammonium hydroxide is tetramethylammonium hydroxide (TMAH or TMAOH). The preferred source of hydroxide ions of the present invention is chosen from sodium hydroxide, potassium hydroxide, calcium hydroxide and TMAH. More preferably, the source of hydroxide ions of the present invention is chosen from sodium hydroxide and TMAH. The most preferred source of hydroxide ions is sodium hydroxide.

Preferably, the aqueous alkaline etch composition is composed of hydrogen peroxide, one or more sources of hydroxide ions chosen from alkali metal hydroxides, alkaline earth metal hydroxides, ammonium hydroxide and quaternary ammonium compounds, counter cations of the one or more sources of hydroxide ions and water. More preferably, the aqueous alkaline etch composition is composed of hydrogen peroxide, one or more sources of hydroxide ions chosen from sodium hydroxide, potassium hydroxide, calcium hydroxide, ammonium hydroxide and (C₁-C₈)alkyl quaternary ammonium hydroxide, counter cations of the one or more sources of hydroxide ions and water. Even more preferably, the aqueous alkaline compositions are composed of hydrogen peroxide, one or more sources of hydroxide ions chosen from sodium hydroxide, ammonium hydroxide and (C₁-C₄)alkyl quaternary ammonium hydroxide, counter cations of the one or more sources of hydroxide ions and water. Still more preferably, the aqueous alkaline etch composition is composed of hydrogen peroxide, one or more sources chosen from sodium hydroxide, ammonium hydroxide and TMAH, counter cations of the one or more sources of hydroxide ions and water. Most preferably, the aqueous alkaline etch composition is composed of hydrogen peroxide, sodium hydroxide as a source of hydroxide ions, sodium counter cations and water, wherein a pH is 12.5-13.5.

The substrates are etched with the aqueous alkaline etch composition of the present invention, for example, by spraying or immersing the substrate in the aqueous alkaline etch composition for 2 minutes to 15 minutes, preferably, from 5 minutes to 10 minutes. The temperature of the aqueous alkaline etch composition during etching is from 30-90 °C, preferably, from 40-80 °C, more preferably, from 50-80 °C. The etching method of the present invention alters the surface morphology of polymer materials such as ABS and ABS-PC to roughen or texturize at least the ABS, ABS-PC or combinations thereof of the surface to provide crevices or pores in at least the ABS, ABS-PC or combinations thereof.

Although the substrates of the present invention include ABS, ABS-PC or combinations thereof, the substrates of the present invention can include one or more additional polymer materials which the aqueous alkaline etch solution can etch. Such additional polymer materials include, but are not limited to, thermoplastic resins such as acetal resins, acrylics, such as methyl acrylate, cellulosic resins, such as cellulose acetate, cellulose propionate, cellulose acetate butyrate and cellulose nitrate, polyethers, nylon, polyethylene, polystyrene, styrene blends, polychlorotrifluoroethylene, and vinylpolymers and copolymers, such as vinyl acetate, vinyl alcohol, vinyl butyral, vinyl chloride, vinyl chloride-acetate copolymer, vinylidene chloride and vinyl formal; thermosetting resins such as allyl phthalate, furane, melamine-formaldehyde, phenol-formaldehyde and phenol-furfural copolymers, alone or compounded with butadiene acrylonitrile copolymers or acrylonitrile-butadiene-styrene copolymers, polyacrylic esters, silicones, urea formaldehydes, epoxy resins, allyl resins, glyceryl phthalates and polyesters. It is preferred that the organic polymer components of the substrates of the present invention are composed of ABS, ABS-PC or combinations thereof. More preferably, the organic polymer components of the substrates of the present invention are composed of ABS or ABS-PC, most preferably, the organic polymer components of the substrates of the present invention are composed of ABS.

After at least the ABS, ABS-PC or combinations thereof are etched, the substrate is optionally rinsed with water. The substrate is then, optionally, further treated for reception of a catalyst for catalyzing electroless metal plating using conventional processes known in the art for electroless metallization. Conventional catalysts can be used to catalyze the electroless metal plating. Such catalysts include, but are not limited to, colloidal and ionic catalysts. Such catalysts include, but are not limited to, one or more noble metals such as gold, silver, platinum and palladium. Preferably, the one or more noble metals are chosen from silver and palladium. More preferably, the catalyst metal is palladium. The metals of the catalysts can be applied in their reduced metal state or, in the case of ionic catalysts, they are applied in their ionic state, such as palladium (II) and silver (I). Preferably, the catalyst metal ions are palladium (II) ions.

When the catalyst is a colloidal catalyst, preferably, a tin-palladium catalyst is used. Such tin-palladium catalysts are well known in the art and disclosed in the electroless metal plating literature. A commercially available tin-palladium catalyst is CIRCUPOSIT™ 3344 tin-palladium catalyst (available from Dow Electronic Materials, Marlborough, MA).

When the catalyst is an ionic catalyst, preferably, an aqueous alkaline palladium (II) catalyst is used. Such aqueous alkaline palladium (II) catalyst include one or more complexing agents which stabilize the catalyst prior to application to the substrate. Such complexing agents include, but are not limited to, pyrazine derivatives, such as, 6-dimethylpyrazine, 2,3-dimethylpyrazine, 2,5-dimethylpyrazine, 2,3,5-trimethylpyraizine, 2-acetylpyrazine, aminopyrazine, ethylpyrazine, methoxypyrazine, and 2-(2'-hydroxyethyl)pyrazine. Molar ratios of complexing compounds to metal ions can range from 1:1 to 4:1. Such ionic catalysts are known in the art or can be obtained from the electroless metal plating literature.

In preparation for reception of the colloidal or ionic catalyst, the substrate with the etched organic polymer material is conditioned. The etched organic polymer material which includes at least ABS, ABS-PC or combinations thereof can be conditioned with one or more conventional conditioners known in the art. The substrate containing the etched polymers is, for example, sprayed or immersed in the conditioner at temperatures of 30-90 °C, preferably, from 40-80 ° C. The substrate is contacted with the conditioner for 2-10 minutes. Examples of commercially available acid conditioners are CIRCUPOSIT™ Conditioners 3320 and 3327 solutions (available from Dow Electronic Materials). Examples of commercially available alkaline conditioners are CIRCUPOSIT™ Conditioner 231, 3325, 813 and 860 formulations. Preferably, alkaline conditioners are used. Optionally, the substrate is rinsed with water.

Optionally, a pre-dip can then be applied to the substrate with the etched and conditioned polymer. The pre-dip can be applied, for example, by spraying or immersing the substrate in the pre-dip. Pre-dips are applied at temperatures of 30-80 °C, preferably, from 40-70 °C. Pre-dips can be applied for 2-5 minutes. Conventional pre-dips can be used. Examples of pre-dips are aqueous solutions of organic salts such as sodium potassium tartrate, sodium carbonate or sodium citrate, 0.5% to 3% sulfuric acid, aqueous nitric acid solutions with a pH of 2 or less, or an acidic solution of 25 g/L to 75 g/L sodium sulfate. Such pre-dips are known in the art or disclosed in the electroless metal plating literature. Optionally, the substrate is rinsed with water.

A colloidal or ionic catalyst, as described above, is then applied to the conditioned polymers of the substrate by conventional processes, for example, by spraying or immersing the substrate in a catalyst solution. The substrate is then treated with the catalyst at temperatures from 30-80 °C, preferably, from 30-60 °C. Catalyst dwell time can range from 15 seconds to 10 minutes, preferably, from 2 minutes to 8 minutes for vertical equipment and, preferably, 25 seconds to 120 seconds for horizontal equipment. The textured surfaces of the polymers of the substrate enable the catalysts to settle on the tops of the surfaces of the polymers as well as in the crevices and pores of the textured surfaces to act as seeds for metal deposits to anchor the metal deposits to the textured polymer and improve adhesion. Optionally, the substrate is rinsed with water.

Optionally, if a colloidal catalyst, such as a tin-palladium catalyst, is used in electroless metal plating, an acceleration step is done. The acceleration step strips tin from the colloidal catalyst to expose the palladium metal for electroless plating. Conventional acceleration solutions include, but are not limited to, 30wt% aqueous hydrochloric acid solution. Such solutions can be applied, for example, by spraying or immersing the substrate in the accelerator solution at temperatures from 30-80 °C, preferably, from 40-70 °C. Optionally, the substrate is rinsed with water.

When the catalyst is an ionic catalyst, the substrate including the catalyst is treated with a reducing solution to reduce the metal ions to their reduced metal state. The substrate with the ionic catalyst can be, for example, sprayed with the reducing solution or immersed in the reducing solution. The reducing solution is applied at room temperature to 80 °C, preferably from 30-60 °C. Contact times between the reducing solution and the catalyzed substrate are conventional, for example, contact times can range from 30 seconds to 5 minutes before application of the electroless metal plating bath.

Reducing solutions include one or more reducing agents in amounts sufficient to reduce substantially all of the metal ions to metal. Such amounts are conventional amounts and are well known by those of skill in the art or disclosed in the electroless metal plating literature. Examples of conventional reducing agents are dimethylamine borane, sodium borohydride, ascorbic acid, iso-ascorbic acid, sodium hypophosphite, hydrazine hydrate, formic acid and formaldehyde. A preferred reducing agent is sodium hypophosphite.

The catalyzed substrate including the polymers are then electroless plated with metal. The substrate can be, for example, sprayed with the electroless metal plating bath or immersed in the electroless metal plating bath. Electroless metal plating can vary depending on the thickness of the metal desired. Electroless metal plating temperatures can be conventional. The pH of the electroless metal plating baths are typically alkaline. Metals which can be electroless plated include, but are not limited to, copper, copper alloys, nickel and nickel alloys. Metallization of the polymers of the substrate can be selective, such that only ABS, ABS-PC or combinations of ABS and ABS-PC are electroless metal plated.

Conventional electroless metal plating baths can be used to electroless plate the polymers of the substrates of the present invention. Such metal plating baths are well known to those of skill in the art and are disclosed in the electroless metal plating literature. Many electroless metal plating baths are commercially available. An example of a commercially available electroless copper plating bath is CIRCUPOSIT™ 880 Electroless Copper plating bath (available from Dow Electronic Materials). An example of a commercially available electroless nickel-phosphorous plating bath is NIPOSIT™ PM 980 electroless nickel plating bath (available from Dow Electronic Materials).

Preferably, copper is plated on the ABS, ABS-PC, combinations thereof and additional polymers of the substrate. More preferably, copper is plated on ABS, ABS-PC or combinations thereof, even more preferably, copper is plated on ABS or ABS-PC, most preferably, copper is plated in ABS. Copper plating times and temperatures can be conventional. Preferably, electroless copper plating is done at room temperature to 80 °C, more preferably, from 30° C to 60° C.

Further conventional processing of the electroless metal plated substrates of the present invention can be done to provide a final article or product. The electroless plated substrates can be plated with electrolytic copper using conventional electrolytic copper plating methods. An example of a commercially available electrolytic copper plating bath is ELECTROPOSIT™ 1100 VMS Copper Electroplating Solution (available from Dow Electronic Materials).

The following examples are included to further illustrate the invention but are not intended to limit its scope.

### Example 1 (Invention)

### Copper Adhesion to ABS and ABS-PC Etched with an Aqueous Alkaline Hydrogen Peroxide Composition of the Invention

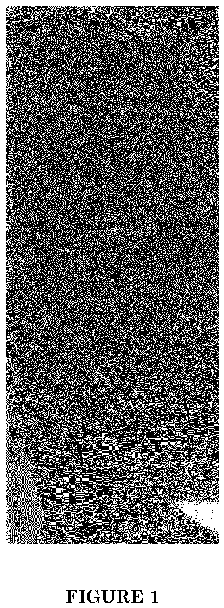

1. ABS-PC coupons are etched for 6 minutes at about 70 °C in an aqueous alkaline composition composed of 14 g/L hydrogen peroxide, 18 g/L sodium hydroxide with the balance water and the pH is 12.8, then the etched coupons are rinsed with DI water at room temperature for 2 minutes;
2. The etched coupons are treated in CIRCUPOSIT™ Conditioner 3325 aqueous alkaline solution or CIRCUPOSIT™ Conditioner 231 aqueous alkaline solution at 60 °C for 5 minutes, then rinsed with DI water for 2 minutes;
3. The etched and conditioned coupons are submerged in an acidic pre-dip solution maintained at pH 2 with nitric acid for 1 minute before applying an ionic catalyst;
4. Each etched and conditioned coupon is immersed into ionic aqueous alkaline catalyst solutions for 5 minutes at 40 °C, wherein the catalyst includes palladium ions complexed with 2,5-dimethylpyrazine in one liter of water, wherein a molar ratio of complexing agent to palladium ions is 1:1, and the catalyst is buffered with sufficient amounts of sodium carbonate, sodium hydroxide or nitric acid to achieve a catalyst pH of 9-9.5, then the coupons are rinsed with DI water for 2 minutes at room temperature;
5. The coupons are then immersed into a 0.6 g/L dimethyl amine borane and 5 g/L boric acid solution at 30° C for 2 minutes to reduce the palladium ions to palladium metal, then the coupons are rinsed with DI water for 2 minutes; and
6. The activated coupons are immersed in CIRCUPOSIT™ 880 Electroless Copper plating baths at 35-40 °C for 15 minutes to plate electroless copper on the coupons with a thickness of around 1 µm.
   Each coupon is examined for copper plating performance. All the coupons are covered with copper and the copper deposits appear shinny and uniform. No delamination or blistering is observed.
7. The electroless plated copper coupons are then dried with an air gun and stored in a desiccator until copper electroplating.
8. A select area of 10 cm x 5 cm of the electroless copper on the ABS or ABS-PC is exposed by masking some of the area with plater's tape;
9. A 1.5 L solution of ELECTROPOSIT™ 1100 VMS copper bath is heated to about 28 °C and transferred to a Harring Cell maintained at about 28 °C;
10. Air agitation is used during the plating; Carrier TN747 is added at 1.5 g/L and bis-(3-sulfopropyl)-disulfide at 4 ppm;
11. A constant current of 2 A is applied to the coupons for 60 minutes to plate a copper layer with a thickness of 25 µm; and
12. After plating is completed, the coupons are rinsed with water and dipped in Anti-Tarnish for 30 seconds.
The samples are fully covered with shiny bright copper. No blistering is observed. Figure 1 is a photograph of one of the coupons taken with a Motorola Droid camera.

### Example 2 (Comparative)

### Copper Adhesion to ABS-PC Coupons without Pre-Treatment of the Coupons with an Aqueous Alkaline Hydrogen Peroxide Etch Composition of the Invention

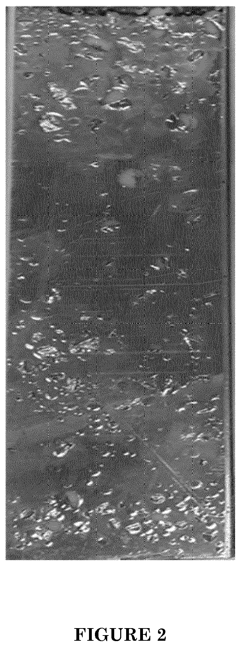

1. ABS-PC coupons are treated with CIRCUPOSIT™ Conditioner 3325 aqueous alkaline solution or CIRCUPOSIT™ Conditioner 231 aqueous alkaline solution at about 60 °C for 5 minutes, then rinsed with DI water for 2 minutes;
2. The conditioned coupons are submerged in an acidic pre-dip maintained at pH 2 with nitric acid for 1 minute;
3. Each conditioned coupon is immersed into ionic aqueous alkaline catalyst solutions for 5 minutes at about 40 °C, wherein the catalyst includes palladium ions complexed with 2,5-dimethylpyrazine in one liter of water, wherein a molar ratio of complexing agent to palladium ions is 1:1, and the catalyst is buffered with sufficient amounts of sodium carbonate, sodium hydroxide or nitric acid to achieve a catalyst pH of 9-9.5, then the coupons are rinsed with DI water for 2 minutes at room temperature;
4. The coupons are then immersed into a 0.6 g/L dimethyl amine borane and 5 g/L boric acid solution at about 30° C for 2 minutes to reduce the palladium ions to palladium metal, then the coupons are rinsed with DI water for 2 minutes; and
5. The activated coupons are immersed in CIRCUPOSIT™ 880 Electroless Copper plating baths at 35-40 °C for 15 minutes to plate electroless copper on the coupons with a thickness of around 1 µm.
   Each coupon is examined for copper plating performance. All the coupons are covered with copper and the copper deposits appear shinny; however, there is extensive blistering on these samples.
6. The electroless plated copper coupons are then dried with an air gun and stored in a desiccator;
7. A select area of 10 cm x 5 cm of the electroless copper on the ABS-PC is exposed by masking other areas with plater's tape;
8. A 1.5 L solution of ELECTROPOSIT™ 1100 VMS copper bath is heated to about 28 °C and transferred to a Harring Cell maintained at about 28 °C;
9. Air agitation is applied during copper plating and Carrier TN747 is added at 1.5 g/L and bis-(3-sulfopropyl)-disulfide at 4 ppm ;
10. A constant current of 2 A is applied to the sample for 60 minutes to a thickness of 25 µm; and
11. After plating is completed the coupons are rinsed with water and dipped in Anti-Tarnish for 30 seconds.
The coupons are covered with bright copper deposits but show considerable blistering and delamination. Figure 2 is a photograph of one of the copper plated coupons showing the considerable blistering.

### Example 3 (Invention)

### Aqueous Alkaline Hydrogen Peroxide Etch of ABS

A plurality of injection molded NOVODUR™ P2MC ABS polymer coupons available from Styrolution Group Corporation are cleaned in a 1.5% by volume solution of Dow product Cleaner PM-900 (available from The Dow Chemical Company, Midland, MI).

Each ABS polymer coupon is immersed in the cleaning solution for 5 minutes at 50 °C. The cleaned coupons are then rinsed with DI water at room temperature for 2 minutes.

The cleaned coupons are then treated with a solvent swell which has the formulation described in Table 1.

**Table 1**

| **COMPONENT** | **AMOUNT** |
|---|---|
| Propylene carbonate | 130 g/L |
| EO/PO Block Copolymer¹ | 10 g/L |
| γ-butyrolactone | 60 g/L |
| Water | To one liter |

| | |
|---|---|
| PLURONIC™ L-64 available from Sigma Aldrich. | |

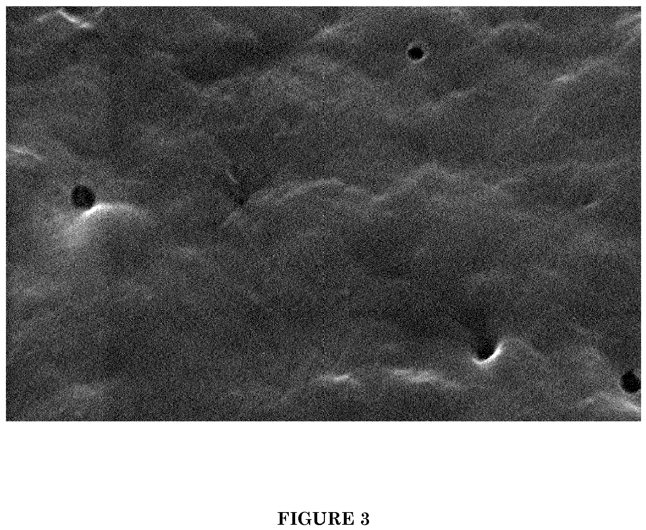

Each cleaned ABS coupon is then immersed in the solvent swell for 2 minutes at about 40 °C. The swelled ABS coupons are rinsed with DI water at room temperature for 2 minutes. The surface of each coupon is then analyzed for surface morphology using SEM with an Amray 3300. Figure 3 is a SEM of a surface of one of the solvent swelled ABS coupons at 25,000 X which is substantially representative of all of the coupons analyzed by the SEM. The hills and valleys as well as the pores observed on the surface are due to the action of the solvent swell.

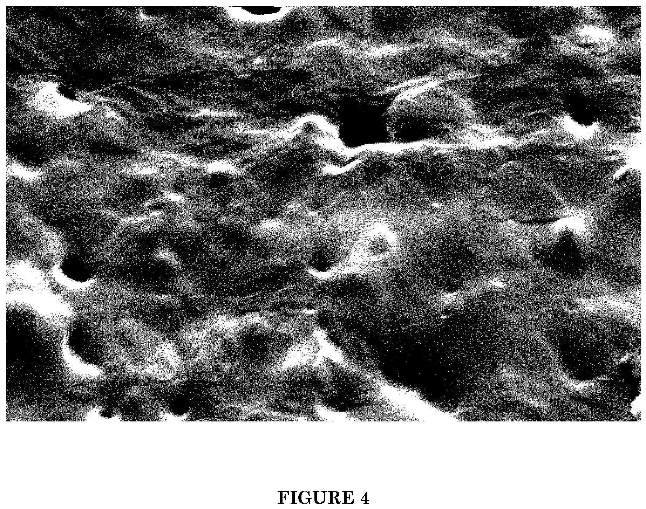

The coupons are then immersed in 1000 mL beakers containing an aqueous alkaline composition of 13.5 g/L hydrogen peroxide and 17 g/L sodium hydroxide at about 70 °C. The solutions have a pH of 12.8 at room temperature. The solvent swelled coupons are immersed in the aqueous alkaline solution for 9 minutes. They are then removed and rinsed with DI water and air dried. The coupons are then analyzed for surface morphology using SEM. Figure 4 is a SEM at 23,808 X of a surface of one of the ABS coupons etched with the aqueous alkaline solution. Figure 4 is substantially representative of the coupons analyzed. The surface morphology appears rougher with higher peaks and deeper valleys than the surface of the coupons after the application of the solvent swell as shown in Figure 3.

### Example 4 (Invention)

### Electroless Copper Plating of ABS and ABS-PC Coupons Etched with an Aqueous Alkaline Solution of the Invention

A plurality of injection molded NOVODUR™ P2MC ABS polymer coupons and BAYBLEND™ T45PG ABS-PC polymer blend coupons (available from Bayer) are provided. The coupons are treated and electroless copper plated according to the following method:
1. Each coupon is treated in a cleaning solution as disclosed in Example 3 for 5 minutes at about 50 °C, then each coupon is rinsed with DI water for 2 minutes at room temperature;
2. The cleaned coupons are then treated with a solvent swell as disclosed in Example 1, Table 2 for 2 minutes at about 40 °C to swell the ABS and ABS-PC, then each coupon is rinsed with DI water for 2 minutes at room temperature;
3. The solvent swelled coupons are then etched for 6 minutes at about 70 °C in an aqueous alkaline composition composed of 13.5 g/L hydrogen peroxide, 17 g/L sodium hydroxide with the balance water and the pH is 13, then the etched samples are rinsed with DI water at room temperature for 2 minutes;
4. The etched coupons are treated in CIRCUPOSIT™ Conditioner 3325 aqueous alkaline solution or CIRCUPOSIT™ Conditioner 231 aqueous alkaline solution at about 60 °C for 5 minutes, then rinsed with DI water for 2 minutes;
5. The coupons are immersed in an acid pre-dip maintained at pH 2 with nitric acid for 1 minute;
6. Each etched and conditioned coupon is immersed into CIRCUPOSIT™ 6530 Catalyst which is an ionic aqueous alkaline palladium catalyst concentrate (available from Dow Electronic Materials) for 5 minutes at 40 °C, wherein the catalyst is buffered with sufficient amounts of sodium carbonate, sodium hydroxide or nitric acid to achieve a catalyst pH of 9-9.5, then the coupons are rinsed with DI water for 2 minutes at room temperature;
7. The coupons are then immersed into a 0.6 g/L dimethyl amine borane and 5 g/L boric acid solution at 30° C for 2 minutes to reduce the palladium ions to palladium metal, then the coupons are rinsed with DI water for 2 minutes; and
8. The activated coupons are immersed in CIRCUPOSIT™ 880 Electroless Copper plating baths at 35-40 °C for 15 minutes to plate electroless copper on the coupons with a thickness of around 1 µm.

Each coupon is examined for copper plating performance. All the coupons are covered with copper and the copper deposits appear shinny and uniform. No delamination or blistering is observed.

The electroless plated copper coupons are then dried with an air gun and stored in a desiccator prior to baking. Each electroless plated copper coupon is baked in a conventional oven for one hour at about 70 °C.

Each coupon is then analyzed for copper adhesion according to the following crosshatch tape test:
a) A crosshatch pattern is made through the film to the substrate;
b) Detached flakes of coating are removed by brushing with a soft brush;
c) Pressure-sensitive tape is applied over the crosshatch cut;
d) Tape is smoothed into place by using a pencil eraser over the area of the incisions; and
e) Tape is removed by pulling it off rapidly back over itself as close to an angle of 180°.
Except for small particles of copper on some of the tapes, no significant portions of copper are removed from the coupons. The coupons retain substantially all of the electroless plated copper.

### Example 5 (Invention)

### Peel Test for Electroless Copper Plated ABS and ABS-PC with Aqueous Alkaline Hydrogen Peroxide Composition of the Invention

A plurality of injection molded NOVODUR™ P2MC ABS polymer coupons and BAYBLEND™ T45PG ABS-PC polymer blend coupons are prepared as described in Example 4 above except the aqueous alkaline etch composition is composed of 14 g/L hydrogen peroxide, 18 g/L sodium hydroxide with the balance water and the pH is 12.8 at room temperature. Copper is electrolessly plated on the coupons as described in Example 4 to achieve a copper thickness of 1 µm. The electroless plated coupons have a uniform and bright deposit. No blistering is observed.

The coupons are then electrolytically plated as described in Example 4 to plate an electrolytic copper layer to a thickness of 25 µm. The copper plated coupons have a uniform and bright copper deposit. No blistering is observed.

Adhesion of the copper to the ABS and ABS-PC coupons is tested with INSTRON™ 90° Peel Test. Each copper plated coupon is inserted in an INSTRON™ 33R4464 apparatus with a 2 kN head pulling at a rate of 1 mm/sec at a 90° angle relative to the apparatus. The copper layer is pulled by the apparatus at a constant rate of 1 mm/second and the force required to maintain this rate is measured. The force at which the copper layer is pulled from the coupon is noted and recorded for each copper plated coupon. The average force at which the copper is pulled from the coupons is determined for the ABS coupons and the ABS-PC coupons. The average force or peel strengths for ABS coupons is 5 N/cm and for the ABS-PC coupons is 1 N/cm. Good adhesion, as accepted in the industry, is a peel strength of 1 N/cm or greater. Accordingly, the peel strengths for the copper layers on the ABS and ABS-PC are considered good and industry acceptable.

### Example 6 (Comparative)

### Electroless Copper Plating of ABS and ABS-PC Coupons Etched with an Aqueous Solution of Hydrogen Peroxide and Peel Test

A plurality of injection molded NOVODUR™ P2MC ABS polymer coupons and BAYBLEND™ T45PG ABS-PC polymer blend coupons are prepared and electrolessly plated with copper as described in Example 4 above except the coupons are etched with an aqueous solution of hydrogen peroxide composed of 14 g/L hydrogen peroxide with the balance water and the pH is around 4 at room temperature. No base is included in the etch formulation.

Each coupon is examined for copper plating performance. All the coupons are covered with copper and the cooper deposits appear shinny and uniform. No delamination or blistering is observed.

The electrolessly plated copper coupons are then dried with an air gun and stored in a desiccator prior to baking. Each electrolessly plated copper coupon is baked in a conventional oven for one hour at 70 °C.

Each coupon is then analyzed for copper adhesion according to the tape test described in Example 4. All of the tapes contain substantial amounts of copper when pulled from the coupons. Most of the coupons have substantially all of the plated copper removed from their surfaces.

### Example 7 (Comparative)

### Electroless Copper Plating of ABS and ABS-PC Coupons Etched with an Aqueous Alkaline Solution of Sodium Hydroxide and Peel Test

A plurality of injection molded NOVODUR™ P2MC ABS polymer coupons and BAYBLEND™ T45PG ABS-PC polymer blend coupons are prepared and electroless plated with copper as described in Example 4 above except the coupons are etched with an aqueous alkaline solution composed of 17 g/L sodium hydroxide with the balance water. The pH is around 13.3 at room temperature. No hydrogen peroxide is included in the etch formulation.

Each coupon is examined for copper plating performance. All the coupons are covered with copper; however, the copper deposits are not uniform. There are sections of each coupon where the copper is bright and sections where the copper is matte in appearance. Some of the coupons show blistering.

The electroless plated copper coupons are then dried with an air gun and stored in a desiccator prior to baking. Each electroless plated copper coupon is baked in a conventional oven for one hour at 70 °C.

Each coupon is then analyzed for copper adhesion according to the tape test described in Example 4. All of the tapes contain substantial amounts of copper when pulled from the coupons. Most of the coupons have the plated copper completely removed from their surfaces.

### Example 8 (Comparative)

### Chromic Acid Etch-Cr(VI) of ABS

A plurality of injection molded NOVODUR™ P2MC ABS polymer coupons are cleaned in the cleaning formulation disclosed in Example 3. Each ABS polymer coupon is immersed in the cleaning solution for 5 minutes at 50 °C. The cleaned coupons are then rinsed with DI water at room temperature for 2 minutes and air dried.

The cleaned coupons are then treated with a solvent swell which has the formulation disclosed in Table 1 of Example 3. Each cleaned ABS coupon is then immersed in the solvent swell for 2 minutes at 40 °C. The swelled ABS coupons are rinsed with DI water at room temperature for 2 minutes and air dried.

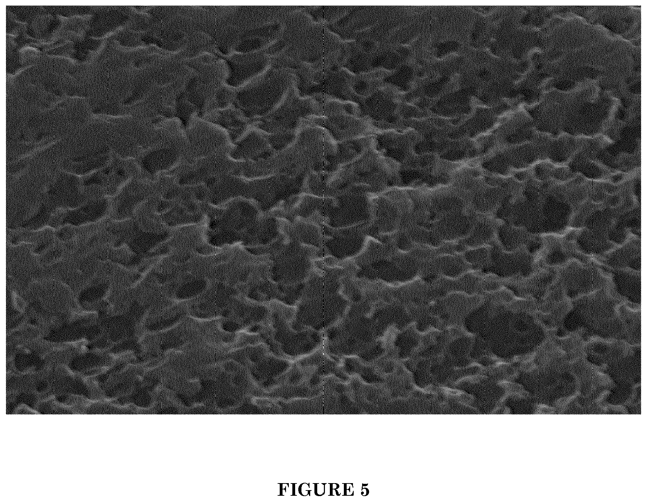

The coupons are then immersed in 1000 mL beakers containing a conventional aqueous Cr(VI) chromic acid etch solution of 400 g/L potassium dichromate and 200 mL/L of concentrated (98wt%) sulfuric acid. The solutions have a pH of less than 1. The solvent swelled coupons are immersed in the chromic acid etch solution for 9 minutes. They are then removed and rinsed with DI water and air dried. The coupons are then analyzed for surface morphology using SEM. Figure 5 is a SEM at 12,300 X of a surface of one of the ABS coupons etched with the chromic acid etch. Figure 5 is substantially representative of the coupons analyzed. The surface morphology appears rough and brittle with an overall porous surface.

Such surfaces are highly desirable for electroless metal plating because the rough, brittle and porous surfaces enable plated metal to anchor and attach to the surfaces to secure the metal layer and provide good adhesion. However, chromic acid etches are hazardous to workers and environmentally unfriendly. Although the aqueous alkaline etch solution of the present invention does not provide an identical brittle and porous etched surface as a chromic acid etch, as shown in Example 3 and in Figure 4, the aqueous alkaline etch still provides substantially rough and irregular surfaces to enable good metal adhesion. At the same time, the aqueous alkaline solution of the present invention does not present the serious hazards to workers and the environment as the chromic acid etch, thus it is both worker and environmentally friendly. The aqueous alkaline etch solution of the present invention is an improvement over the conventional hazardous chromic acid etch solution.

## Claims

1. A method comprising:
a. providing a substrate comprising one or more organic polymers chosen from acrylonitrile butadiene styrene and acrylonitrile butadiene styrene-polycarbonate;
b. providing an aqueous alkaline etch composition composed of hydrogen peroxide and one or more sources of hydroxide ions; and
c. applying the aqueous alkaline etch composition to the substrate to etch at least the one or more organic polymers chosen from acrylonitrile butadiene styrene and acrylonitrile butadiene styrene-polycarbonate.

2. The method of claim 1, further comprising cleaning the substrate prior to applying the aqueous alkaline etch composition to the substrate.

3. The method of claim 1, further comprising treating the substrate with a solvent swell.

4. The method of claim 3, further comprising treating the solvent swell treated and etched substrate with a conditioner.

5. The method of claim 4, further comprising contacting the solvent swell treated, etched and conditioned substrate with a catalyst.

6. The method of claim 5, further comprising contacting the solvent swell treated, etched, conditioned and catalyzed substrate with an electroless metal plating bath to electroless plate metal on the solvent swell treated, etched and conditioned substrate.

7. The method of claim 1, wherein the hydrogen peroxide ranges from 10 g/L to 15 g/L of the aqueous alkaline etch composition.

8. The method of claim 1, wherein the one or more sources of hydroxide ions ranges from 5 g/L to 30 g/L.

9. The method of claim 1, wherein the aqueous alkaline etch composition has a pH of 10 or greater.

10. The method of claim 6, wherein the electroless metal plating bath is a copper, copper alloy, nickel or nickel alloy electroless plating bath.
